# EUROPEAN PATENT SPECIFICATION

(11) **EP 3 805 435 B1**
(45) Date of publication and mention of the grant of the patent: **10.05.2023**
(21) Application number: 20200868.6
(22) Date of filing: 08.10.2020
(51) Int. Cl.: C25F 5/00, C25F 7/00, B23H 7/02, B23H 9/10

(54) **ELECTROCHEMICAL ETCHING**
ELEKTROCHEMISCHES ÄTZEN
GRAVURE ÉLECTROCHIMIQUE

(30) Priority: 08.10.2019 US 201962912239 P; 30.01.2020 US 202016776719
(43) Date of publication of application: 14.04.2021
(73) Proprietor: Pratt & Whitney Canada Corp., Longueuil, Québec J4G 1A1 (CA)
(72) Inventor: ING, Visal, (01BE5) Longueuil, Québec J4G 1A1 (CA); GIRARD, Frederic, (01BE5) Longueuil, Québec J4G 1A1 (CA); BRASSARD, Pascal, (01BE5) Longueuil, Québec J4G 1A1 (CA); JOHNSON, Jonathan, (01BE5) Longueuil, Québec J4G 1A1 (CA)
(74) Representative: Dehns

(56) References cited:
- CA-A1- 2 502 593
- CN-A- 110 153 515
- JP-A- H0 577 114
- US-A- 5 004 883
- US-A1- 2005 274 625
- SHARMA PRIYARANJAN ET AL: "Effect of Wire Material on Productivity and Surface Integrity of WEDM-Processed Inconel 706 for Aircraft Application", JOURNAL OF MATERIALS ENGINEERING AND PERFORMANCE, ASM INTERNATIONAL, MATERIALS PARK, OH, US, vol. 25, no. 9, 12 July 2016 (2016-07-12), pages 3672-3681, XP036045158, ISSN: 1059-9495, DOI: 10.1007/S11665-016-2216-Z [retrieved on 2016-07-12]
- HOLMBERG JONAS ET AL: "Grit Blasting for Removal of Recast Layer from EDM Process on Inconel 718 Shaft: An Evaluation of Surface Integrity", JOURNAL OF MATERIALS ENGINEERING AND PERFORMANCE, ASM INTERNATIONAL, MATERIALS PARK, OH, US, vol. 25, no. 12, 26 October 2016 (2016-10-26), pages 5540-5550, XP036106213, ISSN: 1059-9495, DOI: 10.1007/S11665-016-2406-8 [retrieved on 2016-10-26]

## Description

### TECHNICAL FIELD

The application relates generally to methods and systems for wire electric discharge machining parts and processing the parts after the wire electric discharge machining.

### BACKGROUND

Prior art methods of wire electric discharge machining (wEDM) cut-outs in parts and of validating the resulting parts are known and suitable for their intended purposes. In some applications, such as aerospace applications, in which wEDM may be used usually involve machining relatively expensive parts and labour. Hence, improvements to existing wEDM methods are desirable, especially in the aerospace industry. US 2005/274625 A1, CN 110 153 515 A, Sharma et al, JOURNAL OF MATERIALS ENGINEERING AND PERFORMANCE (2016), 25, 3672, Holmberg et al, JOURNAL OF MATERIALS ENGINEERING AND PERFORMANCE (2016), 25, 5540, JP H05 77114 A, US 5,004,883 and CA 2 502 593 A1 disclose methods including electrical discharge machining.

### SUMMARY

In an aspect, there is provided a method of adding a feature to a part made of a metal alloy as detailed in claim 1.

The method as described above and herein may also include, in whole or in part, and in any combination, one or more of the following additional steps and/or features.

In some embodiments, the step of performing the electrochemical etching process includes forming a sulfate radical.

In some embodiments, the forming the sulfate radical is from a sulfate ion.

In some embodiments, the step of performing the electrochemical etching process includes reacting the sulfate radical with water to form sulfuric acid and oxygen.

In some embodiments, the step of performing the electrochemical etching process includes reacting oxygen with a material of the recast layer to form a metal oxide.

In some embodiments, the recast layer includes a nickel base alloy and the step of performing the electrochemical etching process includes reacting oxygen with the nickel base alloy to form a metal oxide.

In some embodiments, the sulphuric acid has a concentration of between 30% to 50% by volume.

In some embodiments, the sulphuric acid has a concentration of between 35% to 45% by volume.

In some embodiments, the method comprises determining a thickness of the recast layer and wherein the step of performing the electrochemical etching process includes selecting a current to pass through the recast layer based on the determined thickness of the recast layer.

In some embodiments, the step of selecting the current includes selecting the current based on an area of the recast layer.

In some embodiments, the method comprises determining an area of the recast layer and wherein the step of selecting the current includes selecting the current from a range of 120 to 135 ampere-minutes per square foot (1290 to 1450 ampere-minutes per square metre) of the area of the recast layer.

In some embodiments, the step of selecting the current includes selecting the current as a direct current.

In some embodiments, the method comprises controlling the current to be within a range of 5 to 15 amperes.

In some embodiments, the method comprises controlling the current to be less than 10 amperes.

### BRIEF DESCRIPTION OF THE DRAWINGS

Reference is now made to the accompanying figures in which:
Fig. 1 is a schematic of a wire electro-discharge machining system;
Fig. 2 is a schematic of a part into which one or more features have been machined using the system of Fig. 1;
Fig. 3 is a schematic of the part in a system for performing electrochemical etching of the part of Fig. 2;
Fig. 4 is a schematic of a part of the system of Fig. 3; and

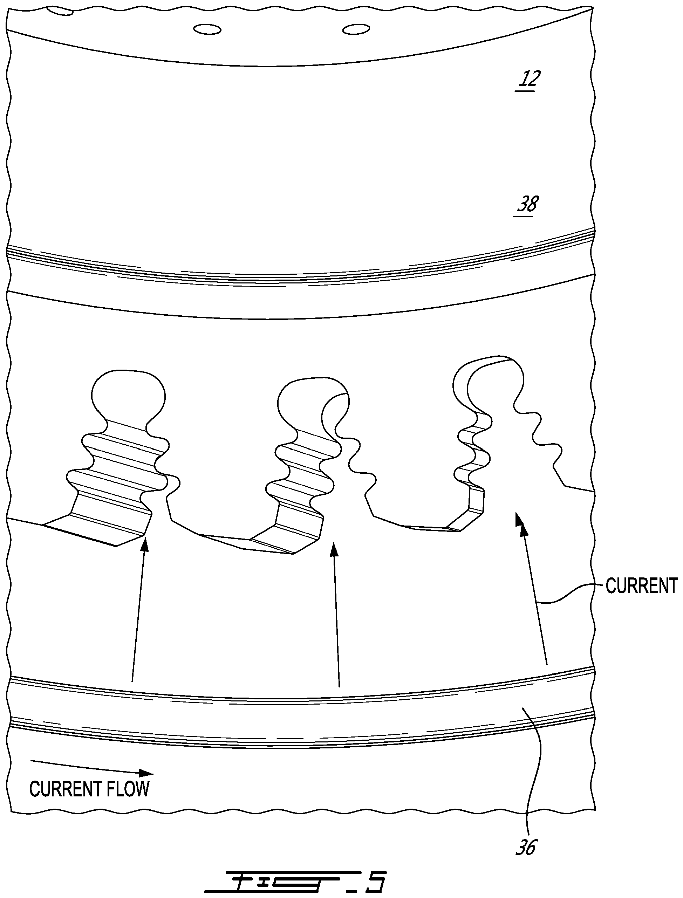

Fig 5 is a close-up view of a part to be electrochemically etched, which is an anode in this embodiment, and a cathode of the system of Fig. 3.

### DETAILED DESCRIPTION

Wire electro-discharge machining ("wire-EDM" or "wEDM") is a known machining process used to machine parts. Although wire-EDM can be used to machine a variety of parts, in gas turbine engine applications, wire-EDM may for example be used to cut fir-tree slots in turbine discs. Typically, wire-EDM uses a wire electrode to cut through the metal part. When the wire electrode cuts through metal there is a localized melting of the base metal, which then re-solidifies. The resulting re-solidified layer is referred to as the "recast layer".

Metal alloys (including but not limited to nickel alloys) sometimes present metallurgical discontinuities (referred to as "segregation"), which are undesirable and often result in a part having such discontinuities being discarded. Accordingly, an inspection of each part is conducted to ensure that no such segregation has occurred. However, when the part has been machined by wire-EDM, the presence of the recast layer can mask segregations in the metal. As such, the recast layer can sometimes render segregations undetectable using at least some inspection techniques.

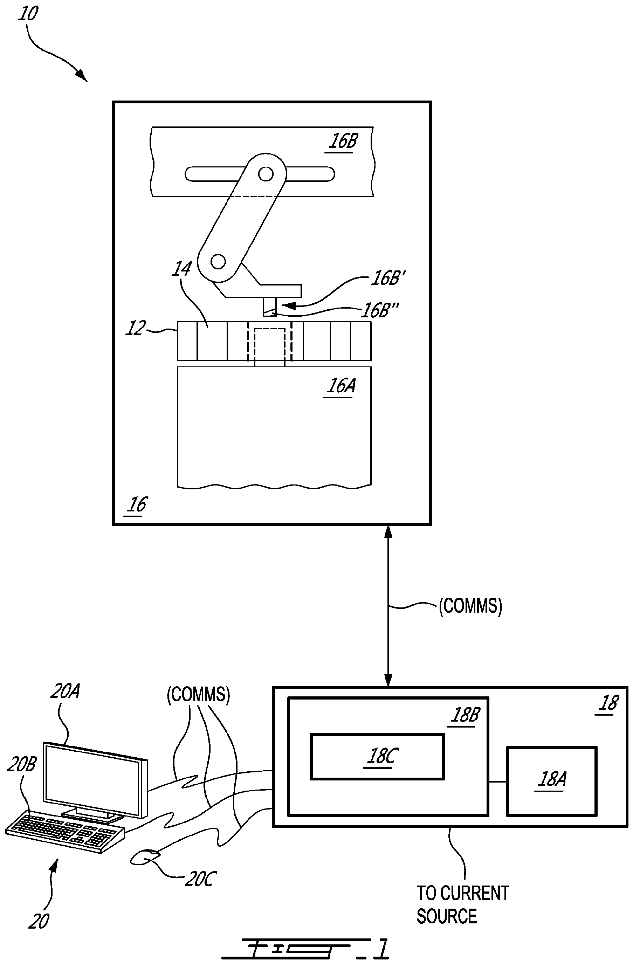

Fig. 1 illustrates a system 10 for machining, in a part 12, in this case a turbine disc, a plurality features 14. I n this embodiment the part 12 is a turbine disc and the features 14 are cut-outs, and more particularly fir-tree shaped slots 14. In other embodiments, the part 12 may be a different part, such as for example a compressor disc, an integrally bladed disc, or other part which is not necessarily a part to be used in an aircraft gas turbine engine. In other embodiments, one or more of the features 14 may be different, such as for example one or more different cut-outs. Stated otherwise, the methods of the present technology may be applied for manufacturing parts and cut-outs different from the turbine disc 12 and the slots 14.

In the present embodiment, the system 10 includes a wire-electric-discharge-machining (wEDM) machine 16. The wEDM machine 16 may include a securement assembly 16A configured to removably engage, and removably engaging as shown in Fig. 1, the part 12 to be machined, to the wEDM machine 16. The wEDM machine 16 may also include a wEDM machining assembly 16B configured to machine the part 12 using a wEDM process. The wEDM machining assembly 16B includes a wire electrode 16B' having a zinc component 16B". The wire electrode 16B' is used by the wEDM machining assembly 16B to cut, using wEDM, the feature(s) 14 into the part 12. The wEDM machine 16, including the securement assembly 16A and the wEDM machining assembly 16B, may be conventional. The wEDM machine 16 and its possible components are therefore not shown herein in detail and are not described herein in detail. The wEDM machine 16 may be different than shown, so long as it is capable of providing the functionality and executing the steps described herein.

Still referring to Fig. 1, the system 10 further includes a controller 18 operatively connected to the wEDM machine 16 and to a conventional input-output system 20 that may be used to configure and/or operate the controller 18 and/or the wEDM machine 16. In this embodiment the controller 18 may be any suitable controller, and may be for example a conventional computer selected and configured using conventional parts and programming techniques to provide for the functionality described herein. As a non-limiting example, to this end in the present embodiment, the controller 18 includes a processor 18A, which may include for example one or more conventional central processing units (CPU(s)), and a non-transitory memory 18B, which may include for example a hard drive. The non-transitory memory 18B stores thereon processor-executable instructions 18C and is operatively connected to the processor 18A, such as via a suitable memory bus for example, to allow the processor 18A to execute the processor-executable instructions 18C. The processor-executable instructions 18C may be created using conventional programming methods, such that when executed, the processor-executable instructions 18C cause the controller 18 to operate the wEDM machine 16 to cut the features 14 into the part 12.

The input-output system 20 in this embodiment may be any suitable input-output system, which may be for example selected and configured using conventional parts and programming techniques to provide for the functionality described herein. As a non-limiting example, to this end in the present embodiment, the input-output system 20 includes a conventional monitor 20A for displaying information thereon, such as data received from the controller 18 for example, and a conventional keyboard 20B and mouse 20C for entering data into and interacting with the controller 18. It is contemplated that any other input-output system 20 may be used and/or that the input-output system 20 may be part of the controller 18 and/or that the input-output system 20 may be omitted in some embodiments, so long as the functionality of the system 10 as described herein is provided. Stated more broadly, the system 10 may have more or fewer of the components as described herein, and/or different embodiments of the components described herein, to suit each particular embodiment of the methods of the present technology that are described herein.

The particular combination of operating connections of the controller 18 and/or the input-output system 20 to one or more of the components of the system 10, as may be needed given each particular embodiment and application thereof, may be selected depending on the particular embodiment and extent of automation of the system 10 for example, and may be implemented using any suitable conventional parts and communication protocols. As a non-limiting example, in some embodiments, the communications of the controller 18 to the other components of the system 10 may be wireless, wired, or a combination of wireless and wired. The communications of the controller 18 to the other components of the system 10 in the present embodiment are shown with respective arrows labeled (COMMS).

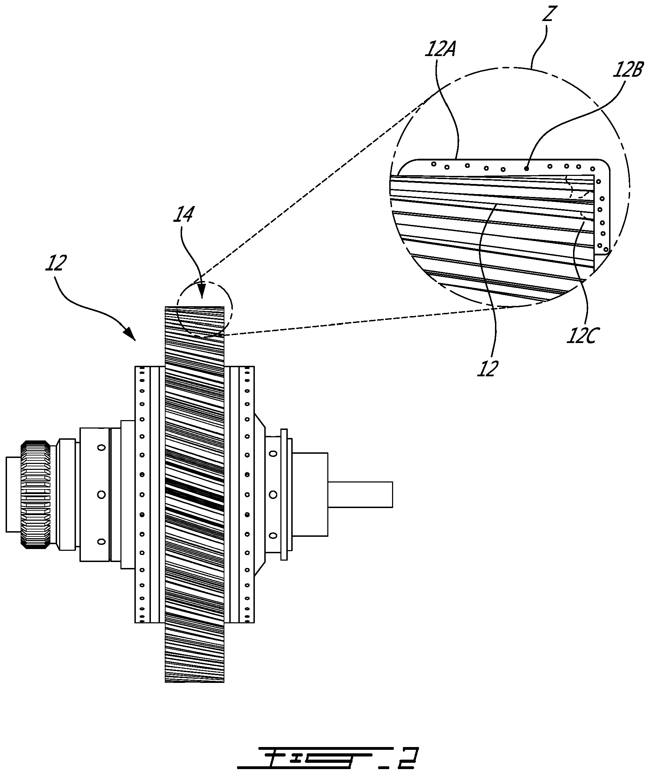

Fig. 2 shows the part 12 having the features 14 machined therein using the wEDM machine 16, and more particularly using the wire electrode 16B' having the zinc component 16B". As shown in zoom (Z), the wEDM process executed using the wire electrode 16B' leaves a recast layer 12A along at least parts of surfaces machined using the wEDM process. Since a wire electrode 16B' having a zinc component 16B" is used, the recast layer 12A includes therein traces of zinc 12B deposited from the zinc component 16B" during the wEDM process.

Further as shown in Fig. 2, sometimes, such machined parts 12, for example when made from metal alloys (including but not limited to nickel alloys) sometimes present metallurgical discontinuities, or "segregations" 12C. Depending on the application of each given part 12, the presence of segregations 12C may render the part 12 unsuitable for its intended application(s). An inspection of the part 12 is conducted to ensure that no such segregation 12C are present. However, the presence of the recast layer 12A may mask and thereby render undetectable one or more segregations 12C, thus rendering the inspection process less reliable. The present technology accordingly provides an electrochemical etching process that removes at least a portion of a zinc content of a recast layer according to claim 1.

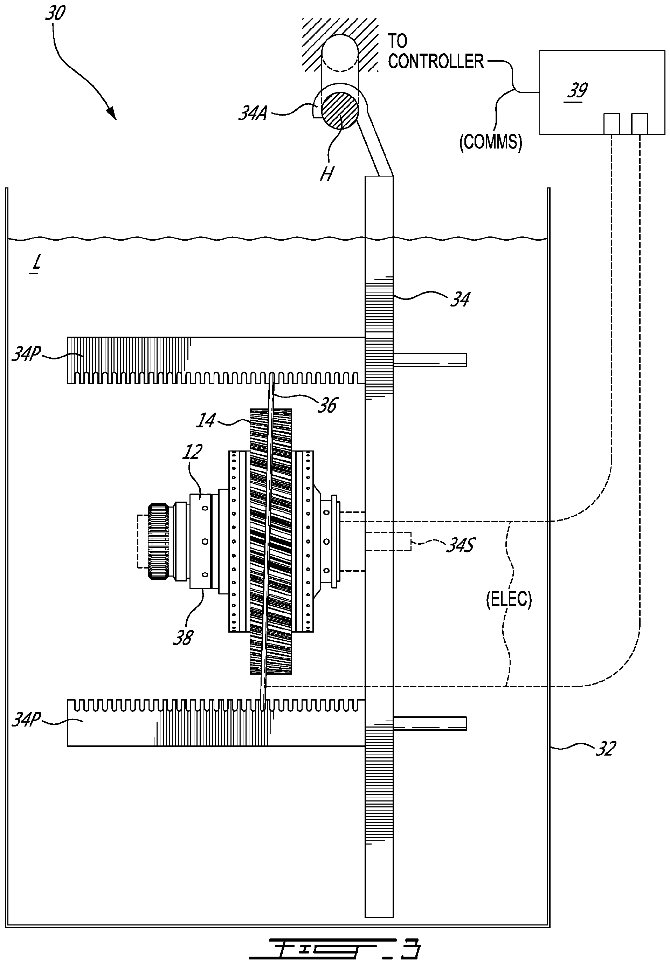

Referring to Fig. 3, for executing the electrochemical etching process, the present technology provides a cathode-anode system 30. The cathode-anode system 30 includes a bath / volume 32 of a suitable liquid electrolyte (L), a sulphuric acid.

In this embodiment, the sulphuric acid is concentrated 40% by volume. In some embodiments, the sulphuric acid is concentrated in a range of 35 to 50% by volume. In some embodiments, the sulphuric acid is concentrated in a range of 35% to 45% by volume. In some such embodiments, the electrolyte (L) may include water (H2O), for example as a remainder of the volume. While such concentrations may provide advantages in some applications, yet other concentrations may be used to suit each particular material and/or composition of the recast layer 12A for example. The bath 32 may be of conventional construction and is sized to receive the part 12 therein. For positioning the part 12 in the bath 32, the cathode-anode system 30 includes a rack 34 sized and configured to position at least the portion(s) of the part 12 having the recast layer 12A to be removed in the bath 32. In this embodiment, the rack 34 is titanium, or titanium plated, and this may provide some advantages in some cases, however other suitable non-reactive (to the electrochemical etching process described herein) materials may also be used. In this embodiment the rack 34 includes a hook 34A at a top portion thereof which is sized to be hung onto a suitable corresponding hook (H) or other suitable member positioned for example over the bath 32 as shown. While providing advantages in some applications, another securement feature may be used instead of or in combination with the hook 34A.

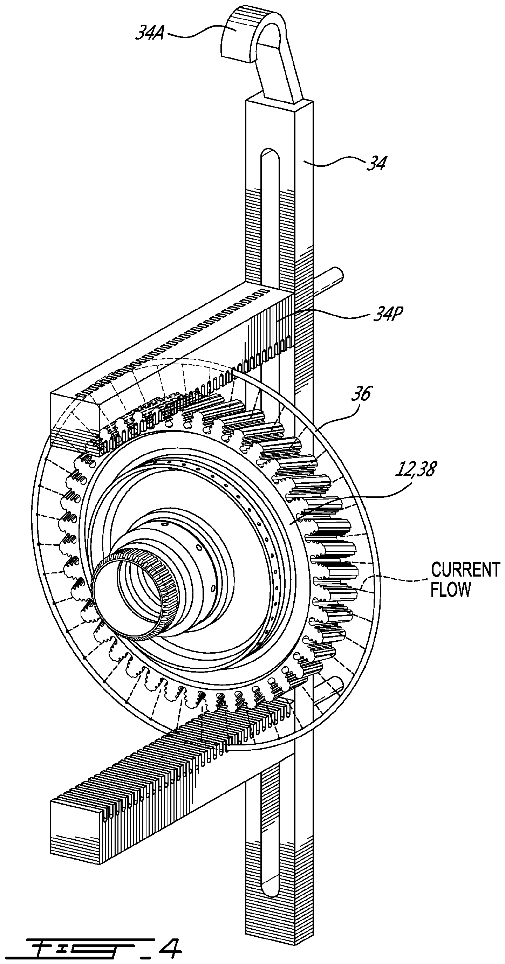

The cathode-anode system 30 further includes a cathode 36 and an anode 38 connected to the rack 34. In the present embodiment, the part 12 is made the anode 38 by a corresponding suitable electrical connection (ELEC) thereto. The cathode 36 is made of a nickel alloy; while this may provide some advantages, other suitable materials may be used. The cathode 36 is spaced from the part / anode 12, 38 as shown in Figs. 3 and 4, so as to direct current flow through the portion(s) of the part 12 having the recast layer 12A to be removed. In this embodiment, the recast layer 12A may be present in the vicinity of the fir-tree shaped slots / features 14, and therefore the cathode 36 is positioned proximate the respective portions having the features 14, and in this embodiment more particularly the outer periphery of the part 12. In this embodiment, the cathode 36 is shaped to conform to the corresponding portion(s) of the part 12 having the feature(s) 14. Since in this embodiment the part 12 is a circular disc 12, the cathode 36 is circular and therefore is placed at an equal distance all around (360 degrees around) the outer periphery of the disc 12. In cases where the part 12 is hexagonal for example, at least part of the cathode 36 may be hexagonal. While this provides advantages in some applications, such as for example an even distribution of the current throughout the recast layer 12, it is contemplated that the cathode 36 may have a different shape, such as for example a shape conforming to at least a part of the portion(s) of the part 12 having the recast layer 12A.

In this embodiment, the cathode 36 is placed at 1 inch (25.4 mm) away from the outer diameter of the disc 12. In some embodiments, the cathode 36 is placed in a range of 3/8 of an inch to 2.5 inches (9.5 mm to 63.5 mm) away from the outer diameter of the disc 12. While this provides advantages in some applications, it is contemplated that the cathode 36 may be placed at other distances in at least some applications. In this embodiment to provide some advantages such as efficiency and although need not be the case in other embodiments, the cathode 36 is positioned relative to the part 12 / anode 38 to pass current through, and as shown in Figs. 3 and 4, in plane with, the portion(s) of the part 12 having the recast layer 12A, in a direction selected to remove the recast layer 12A from the part 12. In an aspect, the present non-limiting placement of the cathode 36 concentrates the current on the recast layer 12A. More broadly, the cathode 36 may be dimensioned to correspond / conform to the portion(s) of the part 12 having the recast layer 12A when disposed proximate the portion(s).

Still referring to Fig. 3, a suitable structure 34S, schematically shown in Fig. 3, may be used to secure the part 12 in between the cathode 36 and the anode 38. In this embodiment the cathode 36 is held in place by two members, in this embodiment plastic members 34P, connected to the rack, but other holders and/or materials therefor may also be used. Any suitable connection may be used to secure the cathode 36 and therefore this aspect is not described herein in detail. Referring to Fig. 3, a suitable source of electrical current, referred to herein as a current source 39, at respective terminals thereof is electrically connected to respective ones of the cathode 36 and the anode 38 using any suitable corresponding electrical connections (ELEC). The current source 39 may include therein one or more components selected to provide for the current supply and control as described herein. The current source 39 and the one or more components thereof be conventional and are therefore not described in detail herein. As shown at the label (COMMS), the current source 39 may be operatively connected to the controller 18 (Fig. 1) to be controlled and operated thereby to provide for the functionality described in this document.

The cathode-anode system 30 may be used to perform a method of etching the part 12 using an electrochemical process described next, by applying current as shown in the figures and described above. The electrochemical process may involve the following steps:

### At the Anode (Part)

The sulphate radical is attracted to the anode where it gives up two electrons and forms oxygen and sulfuric acid molecules.

(SO₄²⁻) - (2 electrons) ⇒ (SO₄) Sulfate ion Sulfate radical

Then,

2 (SO₄) + 2 (H₂O) ⇒ 2 (H₂ SO₄) + O₂ (gas)

Sulfate radical + Water => Sulfuric acid + Oxygen

In this non-limiting embodiment, since the recast layer includes a nickel base alloy, the oxygen forms bubbles that rise into the air, but some of the oxygen reacts with the nickel base alloy to form a metal oxide that (referred to herein as "smut"). In some embodiments where the recast layer may include a different metal, the oxygen may react with the different metal to form a corresponding different metal oxide.

### At the Cathode

In an embodiment, a direct current is applied to the cell and the cathode is negative and the anode (part) is positive. In this embodiment, the hydrogen ions migrate to the cathode where they pick up an electron and becomes a molecule of hydrogen atom. Two atoms then attach together and become a molecule of hydrogen gas.

H⁺ + 1 electron ⇒ H Hydrogen atom Hydrogen atom

H + H ⇒ H₂ (gas) Hydrogen atom Hydrogen atom Hydrogen gas

In this method comprising electrochemically etching the part 12, current density may be selected by determining a thickness of material (e.g. the thickness of the recast layer 12A) to remove and selecting the current density based on the determined thickness. In some embodiments, an area of material (e.g. the thickness of the recast layer 12A) to remove may be determined and the current density may be selected based on the determined area. In the present embodiment, the current density may be selected to be 125 Ampere-minutes per square foot (1350 ampere-minutes per square metre) of the area of the recast layer 12A to be anodized. In some embodiments, the current density may be selected to be in a range of 120 to 135 Ampere-minutes per square foot (1290 to 1450 ampere-minutes per square metre) of the area of the recast layer 12A to be anodized. In some such embodiments, the current may be selected as a direct current.

While such current configurations may provide advantages in some embodiments, it is contemplated that other current densities may be used. In some embodiments, to remove at least at least a substantial portion of the recast layer 12A, a cycle time may be selected to be between 30 and 60 minutes, and may be for example 45 minutes, and an amperage may be selected to be for example in a range of 5 to 15 Amperes, and in some embodiments may be less than 10 Amperes. With these parameters, the cathode 36 may allow for even removal of the recast layer 12A in complex geometry features, such as the fir-tree cut-outs 14. In some embodiments, the present method may allow to remove a thickness of the recast layer 12A that may be in a range of 1/10,000 of an inch to 2/10,000 (0.00254 mm to 0.00508 mm), and may provide advantages relative to at least some prior art methods for removing recast layers 12A in this range. It is contemplated that the methods of the present technology may likewise be used for removing other thicknesses of recast layer(s).

The present method includes adding a feature (e.g. 14) to a part (e.g. 12) made of a metal alloy, which may include wire electric-discharge machining the feature into the part using a wire electrode having a zinc component to create a recast layer having an initial composition make-up including a zinc content and at least one other material content in an outer surface thereof as a result of the wire electric-discharge machining the part feature, and after the step of wire electric-discharge machining the feature, removing at least a portion of the zinc content of the outer surface by performing an electrochemical etching process that includes positioning a cathode adjacent the feature and passing current through a portion of the part that contains the feature.

The present method further includes, after the step of electrochemical etching process, permitting inspection of the part for metallurgical discontinuities. As an example, inspection of the part for metallurgical discontinuities may be performed using conventional metallurgical inspection methods. As seen above, the step of the method of performing the electrochemical etching process includes contacting a sulphuric acid to the portion of the part that contains the feature. In accordance with the claims, this is done by submerging the part.

The above description is meant to be exemplary only, and one skilled in the art will recognize that changes may be made to the embodiments described without departing from the scope of the technology disclosed. For example, while the present methods and systems have been described with respect to a turbine disc 12, the methods and systems may also be applied to other parts, including compressor discs, integrally bladed rotors, or yet other parts which may or may not have aircraft applications. As another example, while the current is passed from the cathode into the anode / part 12, in some embodiments the current may be passed in the opposite direction, before or after, of the first-mentioned

## Claims

1. A method of adding a feature (14) to a part (12) made of a metal alloy, comprising:
wire electric-discharge machining the feature (14) into the part (12) using a wire electrode (16B') having a zinc component (16B") to create a recast layer (12A), the recast layer (12A) having an initial composition make-up including a zinc content and at least one other material content in an outer surface thereof as a result of the wire electric-discharge machining the part feature (14),
after the step of wire electric-discharge machining the feature (14), removing at least a portion of the zinc content of the outer surface of the recast layer (12A) by performing an electrochemical etching process, the electrochemical etching process including:
submerging the part (12) in an electrolyte bath that includes sulphuric acid; and
positioning a cathode (36) adjacent the feature (14) of the submerged part (12) and passing current through a portion of the part (12) that contains the feature (14), the part (12) forming an anode (38) and the current passing from the cathode (36) into the anode (38); and
after the step of performing the electrochemical etching process, permitting inspection of the part (12) for metallurgical discontinuities.

2. The method of claim 1, wherein the step of performing the electrochemical etching process includes forming a sulfate radical, and optionally forming the sulfate radical from a sulfate ion.

3. The method of claim 2, wherein the step of performing the electrochemical etching process includes reacting the sulfate radical with water to form sulfuric acid and oxygen.

4. The method of any preceding claim, wherein the step of performing the electrochemical etching process includes reacting oxygen with a material of the recast layer (12A) to form a metal oxide.

5. The method of any preceding claim, wherein the recast layer (12A) includes a nickel base alloy and the step of performing the electrochemical etching process includes reacting oxygen with the nickel base alloy to form a/the metal oxide.

6. The method of any preceding claim, wherein the sulphuric acid has a concentration of between 30% to 50% by volume, the sulphuric acid optionally having a concentration of between 35% to 45% by volume.

7. The method of any preceding claim, further comprising determining a thickness of the recast layer (12A) and wherein the step of performing the electrochemical etching process includes selecting a current to pass through the recast layer (12A) based on the determined thickness of the recast layer (12A).

8. The method of claim 7, further comprising determining an area of the recast layer (12A) and wherein the step of selecting the current includes selecting the current from a range of 120 to 135 ampere-minutes per square foot (1290 to 1450 ampere-minutes per square metre) of the area of the recast layer (12A).

9. The method of claim 7 or 8, wherein the step of selecting the current includes selecting the current as a direct current.

10. The method of any preceding claim, comprising controlling the current to be within a range of 5 to 15 amperes or controlling the current to be less than 10 amperes.

## Patentansprüche

1. Verfahren zum Hinzufügen eines Merkmals (14) zu einem aus einer Metalllegierung hergestellten Teil (12), umfassend:
Drahterodieren des Merkmals (14) in das Teil (12) unter Verwendung einer Drahtelektrode (16B'), die eine Zinkkomponente (16B") aufweist, um eine Recast-Schicht (12A) zu erzeugen, wobei die Recast-Schicht (12A) eine anfängliche Zusammensetzung aufweist, die einen Zinkgehalt und mindestens einen anderen Materialgehalt in einer äußeren Oberfläche davon als ein Ergebnis des Drahterodierens des Teilmerkmals (14) beinhaltet, nach dem Schritt des Drahterodierens des Merkmals (14), Entfernen mindestens eines Abschnitts des Zinkgehalts der äußeren Oberfläche der Recast-Schicht (12A) durch Durchführen eines elektrochemischen Ätzprozesses, wobei der elektrochemische Ätzprozess Folgendes beinhaltet:
Eintauchen des Teils (12) in ein Elektrolytbad, das Schwefelsäure beinhaltet; und
Positionieren einer Kathode (36) neben dem Merkmal (14) des eingetauchten Teils (12) und Leiten von Strom durch einen Abschnitt des Teils (12), der das Merkmal (14) enthält, wobei das Teil (12) eine Anode (38) bildet und der Strom von der Kathode (36) in die Anode (38) fließt; und
nach dem Schritt des Durchführens des elektrochemischen Ätzprozesses, Ermöglichen einer Untersuchung des Teils (12) auf metallurgische Diskontinuitäten.

2. Verfahren nach Anspruch 1, wobei der Schritt des Durchführens des elektrochemischen Ätzprozesses Bilden eines Sulfatradikals und optional Bilden des Sulfatradikals aus einem Sulfation beinhaltet.

3. Verfahren nach Anspruch 2, wobei der Schritt des Durchführens des elektrochemischen Ätzprozesses Umsetzen des Sulfatradikals mit Wasser beinhaltet, um Schwefelsäure und Sauerstoff zu bilden.

4. Verfahren nach einem der vorangehenden Ansprüche, wobei der Schritt des Durchführens des elektrochemischen Ätzprozesses Umsetzen von Sauerstoff mit einem Material der Recast-Schicht (12A) beinhaltet, um ein Metalloxid zu bilden.

5. Verfahren nach einem der vorhergehenden Ansprüche, wobei die Recast-Schicht (12A) eine Legierung auf Nickelbasis beinhaltet und der Schritt des Durchführens des elektrochemischen Ätzprozesses Umsetzen von Sauerstoff mit der Legierung auf Nickelbasis beinhaltet, um ein/das Metalloxid zu bilden.

6. Verfahren nach einem der vorhergehenden Ansprüche, wobei die Schwefelsäure eine Konzentration zwischen 30 und 50 Vol.-% aufweist, wobei die Schwefelsäure optional eine Konzentration zwischen 35 und 45 Vol.-% aufweist.

7. Verfahren nach einem der vorhergehenden Ansprüche, ferner umfassend Bestimmen einer Dicke der Recast-Schicht (12A) und wobei der Schritt des Durchführens des elektrochemischen Ätzprozesses Auswählen eines Stroms, der durch die Recast-Schicht (12A) hindurchgeht, basierend auf der bestimmten Dicke der Recast-Schicht (12A) beinhaltet.

8. Verfahren nach Anspruch 7, ferner umfassend Bestimmen einer Fläche der Recast-Schicht (12A) und wobei der Schritt des Auswählens des Stroms Auswählen des Stroms aus einem Bereich von 120 bis 135 Ampere-Minuten pro Quadratfuß (1290 bis 1450 Ampere-Minuten pro Quadratmeter) der Fläche der Recast-Schicht (12A) beinhaltet.

9. Verfahren nach Anspruch 7 oder 8, wobei der Schritt des Auswählens des Stroms Auswählen des Stroms als Gleichstrom beinhaltet.

10. Verfahren nach einem der vorhergehenden Ansprüche, umfassend Steuern des Stroms auf einen Bereich von 5 bis 15 Ampere oder Steuern des Stroms auf weniger als 10 Ampere.

## Revendications

1. Procédé d'ajout d'un élément (14) sur une pièce (12) en alliage métallique, comprenant :
l'usinage par électroérosion à fil de l'élément (14) dans la pièce (12) à l'aide d'un fil-électrode (16B') ayant un composant de zinc (16B") pour créer une couche refondue (12A), la couche refondue (12A) ayant une couche initiale préparation de composition comportant une teneur en zinc et au moins une autre teneur en matériau dans une surface extérieure de celle-ci suite à l'usinage par électroérosion à fil de l'élément de pièce (14), après l'étape d'usinage par électroérosion à fil de l'élément (14), le retrait d'au moins une partie de la teneur en zinc de la surface extérieure de la couche refondue (12A) en réalisant un processus de gravure électrochimique, le processus de gravure électrochimique comportant :
l'immersion de la pièce (12) dans un bain d'électrolyte contenant de l'acide sulfurique ; et
le positionnement d'une cathode (36) adjacente à l'élément (14) de la partie immergée (12) et passage du courant à travers une partie de la pièce (12) qui contient l'élément (14), la pièce (12) formant une anode (38) et le courant passant de la cathode (36) dans l'anode (38) ; et
après l'étape d'exécution du processus de gravure électrochimique, la permission de l'inspection de la pièce (12) pour les discontinuités métallurgiques.

2. Procédé selon la revendication 1, dans lequel l'étape de réalisation du processus de gravure électrochimique comporte la formation d'un radical sulfate, et éventuellement la formation du radical sulfate à partir d'un ion sulfate.

3. Procédé selon la revendication 2, dans lequel l'étape de réalisation du processus de gravure électrochimique comporte la réaction du radical sulfate avec de l'eau pour former de l'acide sulfurique et de l'oxygène.

4. Procédé selon une quelconque revendication précédente, dans lequel l'étape d'exécution du processus de gravure électrochimique comporte la réaction de l'oxygène avec un matériau de la couche refondue (12A) pour former un oxyde métallique.

5. Procédé selon une quelconque revendication précédente, dans lequel la couche refondue (12A) comporte un alliage à base de nickel et l'étape de réalisation du processus de gravure électrochimique comporte la réaction de l'oxygène avec l'alliage à base de nickel pour former un/l'oxyde métallique.

6. Procédé selon une quelconque revendication précédente, dans lequel l'acide sulfurique a une concentration comprise entre 30 % et 50 % en volume, l'acide sulfurique ayant éventuellement une concentration comprise entre 35 % et 45 % en volume.

7. Procédé selon une quelconque revendication précédente, comprenant en outre la détermination d'une épaisseur de la couche refondue (12A) et dans lequel l'étape d'exécution du processus de gravure électrochimique comporte la sélection d'un courant pour traverser la couche refondue (12A) sur la base de l'épaisseur déterminée de la couche refondue (12A).

8. Procédé selon la revendication 7, comprenant en outre la détermination d'une zone de la couche refondue (12A) et dans lequel l'étape de sélection du courant comporte la sélection du courant dans une plage de 120 à 135 ampères-minutes par pied carré (1 290 à 1 450 ampères-minutes par mètre carré) de la surface de la couche refondue (12A).

9. Procédé selon la revendication 7 ou 8, dans lequel l'étape de sélection du courant comporte la sélection du courant en tant que courant continu.

10. Procédé selon une quelconque revendication précédente, comprenant la commande du courant pour qu'il soit dans une plage de 5 à 15 ampères ou la commande du courant pour qu'il soit inférieur à 10 ampères.
